# EUROPÄISCHE PATENTANMELDUNG

(11) **EP 0 829 436 A1**
(43) Veröffentlichungstag der Anmeldung: **18.03.1998**
(21) Anmeldenummer: 97114133.8
(22) Anmeldetag: 16.08.1997
(51) Int. Cl.: B65G 67/60

(54) **Vorrichtung und Verfahren zum Entladen**

(30) Priorität: 12.09.1996 DE 19636991
(71) Anmelder: Krupp Fördertechnik GmbH, 45143 Essen (DE)
(72) Erfinder: Huang, Yada, Dr.-Ing., 66482 Zweibrücken (DE)

(57) **Zusammenfassung**

Die Vorrichtung und das Verfahren dienen zum Entladen von Schüttgut aus dem Bereich von Laderäumen (1). Insbesondere ist an eine Anwendung zur Entladung und gegebenenfalls auch zur Beladung von Laderäumen (1) von Schiffen gedacht. Die Vorrichtung weist ein Portal (3) auf, das einen Ausleger (4) trägt, der im Bereich seines dem Portal (3) abgewandten Endes mit einem Greifer-Wippsystem (8) versehen ist. Der Schwenkausleger (4) haltert das höhenpositionierbare Greifer-Wippsystem (8). In einem Arbeitsbereich des Greifers (9) ist ein Auffangbunker (7) angeordnet, der das Schüttgut mindestens einer Fördereinrichtung (20,21) zuführt. Ein Vertikalrahmen (10) des Greifer-Wippsystems (8) ist starr mit einem den Auffangbunker (7) tragenden Bunkerausleger (6) verbunden. Der Bunkerausleger (6) ist vertikal schwenkbar mit dem Ausleger (4) verbunden. Im wesentlichen parallel und mit einem Abstand zum Ausleger (4) erstreckt sich eine Parallel-Führung (23). Die Parallel-Führung (23) ist vertikal verschwenkbar mit dem Vertikalrahmen (10) verbunden. Darüber hinaus ist die Parallel-Führung (4,23) im Bereich ihres dem Vertikalrahmen (10) abgewandten Endes vertikal verschwenkbar mit einem Basistragelement (25) verbunden.

## Beschreibung

Die Erfindung betrifft eine Vorrichtung zum Entladen von Schüttgut aus dem Bereich von Laderäumen, insbesondere aus Laderäumen von Schiffen, die ein Portal aufweist, das einen Ausleger trägt, der im Bereich seines dem Portal abgewandten Endes mit einem Greifer-Wippsystem versehen ist, das einen höhenpositionierbaren Greifer haltert und bei der in einem Arbeitsbereich des Greifers ein Auffangbunker angeordnet ist, der das Schüttgut mindestens einer Fördereinrichtung zuführt.

Die Erfindung betrifft darüber hinaus ein Verfahren zum Entladen von Schüttgut aus dem Bereich von Laderäumen, insbesondere aus Laderäumen von Schiffen, bei dem oberhalb des Laderaumes von einem Ausleger ein GreiferWippsystem positioniert wird, das einen vertikal positionierbaren Greifer haltert, von dem das Schüttgut einem Auffangbunker zugeführt wird, der das Schüttgut in Richtung auf eine sich entlang des Auslegers erstreckende Fördereinrichtung leitet.

Eine Vorrichtung zum Entladen von Schüttgut aus dem Bereich von Laderäumen ist bereits aus der DE-AS 11 10 081 bekannt. Im Bereich eines Auslegers ist ein Kran angeordnet, der über einen Greifer Schüttgut aus dem Bereich eines Laderaumes des Schiffes entlädt. Das Schüttgut wird einem Trichter zugeführt, der das Schüttgut in den Bereich eines Förderbandes leitet. Der Greifer ist an verschwenkbaren Streben angeordnet, die den Greifer einerseits in eine Position vor einer Spitze des Auslegers positionieren, um ein Absenken in den Laderaum des Schiffes zu ermöglichen, und die den Greifer in einer anderen Positionierung oberhalb des Trichters haltern. Diese Ausführung der Entladevorrichtung hat unter anderem die Nachteile: a) der Trichter steht nicht immer senkrecht und deshalb wird die Materialaufgabe durch den an verschwenkbaren Streben angeordneten Greifer beschwert; b) die Bewegung des Greifers und der Strebe erfordert ein sehr kompliziertes Seilsystem sowie eine Steuerung; und c) der Schwerpunkt des Greiferwippsystems wandert während des Wippvorgangs sehr stark in vertikaler Richtung, was einen zusätzlichen Energieverbrauch zur Folge hat.

Eine weitere Entladevorrichtung für Schiffe, die einen mit einem Greifer versehenen Kran aufweist, der auf einem Aufleger positioniert ist, wird in der DE-PS 618 848 beschrieben. Der Ausleger ist im Bereich eines Entladekais angeordnet. Im Bereich des Auslegers ist ein trichterartiger Auffangbunker angeordnet, der das vom Greifer entladene Schüttgut einem Transportband zuführt. In dieser Vorrichtung schwenkt der Hauptausleger des Gerätes nicht. Deshalb bleibt dieser einerseits immer senkrecht, andererseits muß aber die Verladebrücke sehr hoch gebaut werden, um das Schiff auch in seiner höchsten Stellung entladen zu können. Dies hat nicht nur ein größeres Gewicht des Gerätes zur Folge, auch der Hubweg des Greifers ist größer. Der auf der Verladebrücke angeordnete fahrbare Greiferdrewippkrahn braucht zudem ein eigenes Gegengewicht, das die Standsicherheit des Gerätes sehr beeinträchtigen kann. Auch die Wanderung des Drehwippsystems mit seinem Gegengewicht und dessen verschiebbaren Brückenträgers hat eine schwere Lastwechselung in der Verladebrücke zur Folge. Außerdem wandert der Schwerpunkt des Greiferwippsystems in dieser Ausführung während des Wippvorganges auch in vertikaler Richtung, was einen unerwünschten Energieverbrauch zur Folge hat.

Ebenfalls wird eine kranartige Entladevorrichtung mit Greifern zum Entladen von Schiffsladeräumen in der DE-AS 15 56 147 beschrieben. Der Kran ist auf einem fahrbaren Portal angeordnet. Auch diese Entladevorrichtung besitzt einen sehr großen Aufbau und einen sehr großen Hubweg des Greifers. Zudem hat sie eine sehr schwere Wanderlast.

Ein weiterer entlang einer Pier verfahrbarer Entlader ist in der DE-AS 12 53 159 beschrieben. Ein Entladekran ist relativ zu einem fahrbaren Portal verschwenkbar. Auch hier sind ein großer Aufbau und Hubweg sowie eine schwere Wanderlast vorhanden. Zudem ist der Wanderungsweg hier noch länger. Ein kompliziertes Seilsystem in dieser Ausführung hat eine teuere Konstruktion und Ersatzteile zur Folge. Da der Greifer das Fördergut von der Schiffsluke zum Bunker oberhalb dem Pier transportieren muß, kann eine starke Verschmutzung des Piers oder Kais nicht ausgeschlossen werden.

Die aus dem Stand der Technik bekannten Vorrichtungen ermöglichen es nicht, in einfacher Weise gleichermaßen gut die Anforderungen an einen preisgünstigen Aufbau, eine einfache und zuverlässige Betriebsweise sowie eine exakte Zuführung des Schüttgutes zur Fördereinrichtung in Kombination miteinander zu erfüllen. Es kann außerdem nicht -ausgeschlossen werden, daß aus dem Bereich des Greifers Schüttgut sowohl auf das Schiff zurückfällt als auch zu einer Materialansammlung auf dem Ausleger und in einer Umgebung des Auffangbunkers führt. Insbesondere bei Schüttgütern, die in Kombination mit Feuchtigkeit schlammartige Materialien ausbilden, ist eine derartige Arbeitsweise ungünstig.

Der Erfindung liegt die Aufgabe zugrunde, eine Vorrichtung der einleitend genannten Art derart zu konstruieren, daß bei geringem Baugewicht eine exakte Materialzufuhr ermöglicht wird.

Diese Aufgabe wird erfindungsgemäß dadurch gelöst, daß ein Vertikalrahmen des Schwenkauslegers starr mit einem den Auffangbunker tragenden Bunkerausleger verbunden ist, daß der Bunkerausleger vertikal schwenkbar mit dem Ausleger verbunden ist und daß sich im wesentlichen parallel und mit einem Abstand zum Ausleger eine Parallel-Führung erstreckt, die vertikal verschwenkbar mit dem Vertikalrahmen verbunden ist sowie im Bereich ihres dem Vertikalrahmen abgewandten Endes vertikal verschwenkbar mit einem Basistragelement verbunden ist.

Das Greiferwippsystem ist erfindungsgemäß derart konstruiert, daß der Greifer während des Wippvorgangs ohne Veränderung seiner Höhenlage arbeitet, und daß das Stellelement des Greiferwippsystems während des Wippvorgangs nur die Reibungskraft und die Kraft infolge der Beschleunigung des Greiferwippsystems zu tragen braucht. Das Wippsystem ist bezogen auf das Eigengewicht selbst (ohne Gegengewicht) ausgeglichen, so daß das Stellelement kaum eine Kraft erfährt.

Weitere Aufgabe der vorliegenden Erfindung ist es, ein Verfahren der einleitend genannten Art derart anzugeben, daß die Handhabung des Schuttgutes durch eine relativ zueinander verbesserte Positionierung der zusammenwirkenden Bauteile verbessert wird.

Diese Aufgabe wird erfindungsgemäß dadurch gelöst, daß der Auffangbunker von einem Bunkerausleger gehaltert wird, der relativ zum Ausleger in lotrechter Richtung drehbeweglich gefuhrt ist und daß der Bunkerausleger über eine Parallelfuhrung derart mit einem Portal des Auslegers gekoppelt wird, daß bei einer vertikalen Schwenkbewegung des Auslegers eine vorgegebene räumliche Orientierung des Auffangbunkers beibehalten wird.

Der Schwenkausleger positioniert das Greifer-Wippsystem während der Durchführung des Entladevorganges oberhalb der betreffenden Schiffsluke und verkürzt damit den Hubweg des Greifers. Der Auffangbunker wird gemeinsam mit dem Greifer-Wippsystem oberhalb der Schiffsluke angeordnet und leitet das entladene Schüttgut der Fördereinrichtung zu. Dadurch werden die wesentlichen horizontalen Bewegungen des Greifers vermieden, die unnötige Totzeiten bei der Durchführung des Entladevorganges zur Folge hätten. Vom Greifer-Wippsytem wird eine kürzere horizontale Wippbewegung durchgeführt, die den Greifer zur Entladung oberhalb des Auffangbunkers und zur Schüttgutaufnahme jenseits des Auslegers positioniert, um ein Absenken zu ermöglichen.

Insbesondere ist daran gedacht, das Greifer-Wippsystem durch eine Wippbewegung des Auslegers zu positionieren. Hierdurch erfolgt eine weitere Vereinfachung der kinematischen Vorgänge. Durch die Anordnung des Greifer-Wippsystem auf einem separaten Bunkerausleger und die parallelogrammartige Kopplung zwischen dem Bunkerausleger und dem Drehteil wird dafür gesorgt, daß bei einer Wippbewegung des Auslegers die Positionierung einer Öffnung des Auffangbunkers exakt beibehalten wird. Insbesondere ist daran gedacht, eine im wesentlichen horizontale Ausrichtung der Einfüllöffnung beizubehalten.

Ein Längsschenkel der Parallelogrammführung wird durch den Ausleger selbst gebildet, so daß es lediglich erforderlich ist, eine zusätzliche Parallel-Führung parallel und mit einem Abstand zum Ausleger anzuordnen. Über das Basistragelement wird die Kopplung zum Drehteil vorgenommen und es wird für den entsprechenden Abstand zum Ausleger gesorgt.

Zur Ermöglichung von Wippbewegungen bei der Durchführung von Entladevorgängen wird vorgeschlagen, daß der Ausleger vertikal verschwenkbar um ein Auslegerwippgelenk zum Drehteil angeordnet ist.

Eine Verbesserung von Positioniermöglichkeiten wird dadurch erreicht, daß der Ausleger horizontal drehbar um ein Portalschwenkgelenk angeordnet ist.

Zur Ermöglichung einer Beibehaltung der Positionierung des Auffangbunkers bei der Durchführung von Wippbewegungen des Auslegers wird vorgeschlagen, daß das Basistragelement in vertikaler Richtung starr relativ zum Drehteill angeordnet ist.

Bei der Durchführung Von Wippbewegungen des Auslegers wird vorgeschlagen, daß vom Ausleger, von der Parallel-Führung, vom Vertikalrahmen sowie vom Basistragelement eine parallelogrammartige Struktur ausgebildet ist.

Eine mechanisch besonders einfache Ausführungsform zur Beibehaltung der Orientierung des Auffangbunkers besteht darin, daß die Wippbewegung des Auslegers hydraulisch erfolgt.

Ebenfalls ist zur Gewährleistung einer hohen Zuverlässigkeit daran gedacht, daß die Fördereinrichtung als mindestens ein Transportband ausgebildet ist.

Eine weitere Erhöhung der konstruktiven Möglichkeiten kann dadurch erreicht werden, daß die Fördereinrichtung aus einem Auslegerförderer und aus einem Bunkerabzugsförderer besteht.

Eine hohe Stabilität bei geringem Baugewicht wird durch eine parallelogrammartgie Struktur erreicht.

Ein einfacher Wippantrieb wird dadurch bereitgestellt, daß zur Ansteuerung des Wippsystems ein zylinderartiges Stellelement vorgesehen ist.

In einer weiteren Ausführungsform ist daran gedacht, daß sowohl Mittel zur Durchführung eines Beladevorganges als auch Mittel zur Durchführung eines Entladevorganges vorgesehen sind.

Zur Unterstützung von Beladevorgängen des Schiffes ist daran gedacht, daß zur Durchführung von Beladevorgängen oberhalb des Portals ein Zuführtrichter und zwischen Portal und Schleifenwagen eine Kuppelstange angeordnet ist.

In der Zeichnung sind Ausführungsbeispiele der Erfindung schematisch dargestellt. Es zeigen:
- Fig. 1: eine Seitenansicht eines von einem Ausleger oberhalb eines zu entladenen Schiffes positionierten Greiferauslegers mit parallelogrammartiger Positionierungsvorgabe für einen Auffangbunker,
- Fig. 2: einen Horizontalschnitt gemäß Schnittlinie II-II in Fig. 1,
- Fig. 3: einen Vertikalschnitt gemäß Schnittlinie III-III in Fig. 1,
- Fig. 4: einen Querschnitt gemäß Schnittlinie IV-IV in Fig. 1,
- Fig. 5: einen Querschnitt gemäß Schnittlinie V-V in Fig. 1,
- Fig. 6: einen Querschnitt gemäß Schnittlinie VI-VI in Fig. 1,
- Fig. 7: eine Seitenansicht eines weiteren von einem Ausleger oberhalb eines zu entladenden Schiffes positionierten Greiferauslegers sowie einer Zusatzeinrichtung zur Durchführung von Be- und Entladungsvorgängen,
- Fig. 8: einen Querschnitt gemäß Schnittlinie VIII-VIII in Fig. 7,
- Fig. 9: einen Querschnitt gemäß Schnittlinie IX-IX in Fig. 7,
- Fig. 10: einen Vertikalschnitt gemäß Schnittlinie X-X in Fig. 7,
- Fig. 11: eine Ansicht gemäß Blickrichtung XI in Fig. 7,
- Fig. 12: eine Prinzipdarstellung zur Veranschaulichung einer Beladepositionierung sowie eine Entladepositionierung
**und**
- Fig. 13: eine weitere Prinzipdarstellung zur Veranschaulichung der Positionierung eines unteren Gurtes sowie eines oberen Gurtes einerseits in einer Beladestellung und andererseits in einer Entladestellung.

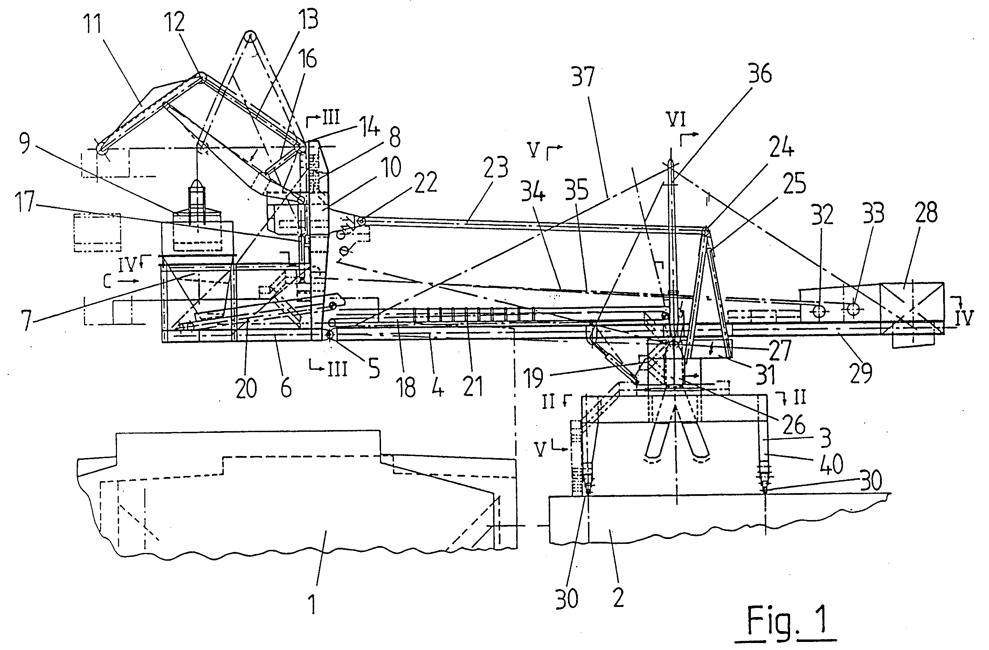

Gemäß der Ausführungsform in Fig. 1 ist zur Entladung eines Schiffes (1) im Bereich eines Entladekais (2) ein Portal (3) angeordnet, das einen Ausleger (4) trägt, der sich bis in einen Bereich oberhalb des Schiffes (1) erstreckt. Der Ausleger (4) ist über ein Bunkerschwenklager (5) mit einem Bunkerausleger (6) verbunden, der einen trichterartigen Auffangbunker (7) trägt, der auch als Material-Puffer dienen kann.

Der Bunkerausleger (6) haltert ebenfalls ein Greifer-Wippsystem (8), das kranartig einen höhenpositionierbaren Greifer (9) trägt. Das Greifer-Wippsystem (8) weist einen Vertikalarm (10) auf, der im wesentlichen rechtwinklig zum Bunkerausleger (6) angeordnet und starr mit dem Bunkerausleger (6) verbunden ist.

Zur Ermöglichung einer horizontalen Positionierung des Greifers (9) weist das Greifer-Wippsystem (8) eine Außenstrebe (11) auf, die über ein Schwenkgelenk (12) drehbeweglich mit einer Strebe (13) verbunden ist, die ihrerseits über ein Schwenkgelenk (14) drehbeweglich mit dem Vertikalrahmen (10) verbunden ist. Zur Bewegungsvorgabe sind darüber hinaus eine Stützstrebe (15) sowie eine Quertraverse (16) vorgesehen. Die Stützstrebe (15) ist gelenkig mit der Außenstrebe (11) sowie mit einem Stellelement (17) verbunden. Die Quertraverse (16) ist gelenkig sowohl mit der Stützstrebe (15) als auch mit dem Schwenkgelenk (14) verbunden. Die Stützstrebe (15) erstreckt sich im wesentlichen parallel zur Innenstrebe (13).

Insbesondere ist daran gedacht, den Bunkerausleger (6), das Greifer-Wippsystem (8) und den Vertikalarm (10) einteilig als L-Rahmen auszubilden, wobei diese Konstruktion näherungsweise L-förmige Konturen einschließt. Die einteilige Ausbildung umfaßt ebenfalls eine nachträgliche starre Verbindung von zunächst separaten Teilelementen.

Bei einer Steuerbewegung des Stellelementes (17) kann das Greifer-Wippsystem (8) aus der in Fig. 1 in durchzogenen Linien dargestellten ausgefahrenen Positionierung in die in gestrichelten Linien eingezeichnete Entladepositionierung überführt werden. In der Entladepositionierung ist der Greifer (9) oberhalb des Auffangbunkers (7) positioniert, so daß zu entladendes Schüttgut nach einem Entriegeln des Greifers (9) in den Auffangbunker (7) hineinfallen kann.

Der Auffangbunker (7) ist über eine Fördereinrichtung (18) mit einer im Bereich des Entladekais (2) angeordneten Zentralschurre (19) gekoppelt. Insbesondere ist daran gedacht, die Fördereinrichtung (18) aus einem Bunkerförderer (20) sowie einem Auslegerförderer (21) auszubilden. Die Förderer (20,21) können als Förderbänder konstruiert sein. Insbesondere ist daran gedacht, ein Ende des Bunkerförderers (20) in lotrechter Richtung oberhalb und leicht überlappend zu einem Ende des Auslegerförderers (21) anzuordnen. Hierdurch wird ein Materialübergang vom Bunkerförderer (20) zum Auslegerförderer (21) erleichtert.

Der Vertikalrahmen (10) ist über ein Rahmenschwenkgelenk (22) zur Durchführung vertikaler Schwenkbewegungen mit einer Parallel-Führung (23) verbunden, die sich im wesentlichen parallel zum Ausleger (4) erstreckt. Im Bereich ihres dem Greifer-Wippsystem (8) abgewandten Endes ist die Parallel-Führung (23) über ein Schwenkgelenk (24) mit einem Basistragelement (25) verbunden.

Der Ausleger (4) ist mit dem Portal (3) über ein Portalschwenkgelenk (26) verbunden. Das Portalschwenkgelenk (26) ermöglicht ein horizontales Verschwenken des Auslegers (4) relativ zum Portal (3). Darüber hinaus ist ein Auslegerwippgelenk (27) zwischen dem Portalschwenkgelenk (26) und dem Ausleger (4) angeordnet, um vertikale Wippbewegungen des Auslegers (4) relativ zum Portal (3) zu ermöglichen. Ein Ausgleich der Hebelbelastung und des Gewichtes des gesamten Auslegersystems, erfolgt über ein Gegengewicht (28), das auf einer Verlängerung (29) des Auslegers (4) angeordnet ist. Zur Ermöglichung einer Verfahrbarkeit entlang des Entladekais (2) weist das Portal (3) Räder (30) auf. Die Durchführung der vertikalen Wippbewegung des Auslegers (4) erfolgt über einen Hydraulikzylinder (58).

Das als Pylon ausgebildete Basistragelement (25) ist mit einem Drehteil (31) verbunden, das gemeinsam mit dem Ausleger (4) um das Portalschwenkgelenk (26) verdrehbar ist, das jedoch nicht Wippbewegungen des Auslegers (4) relativ zum Auslegerwippgelenk (27) folgt.

Bei einem Wippen des Auslegers (4) wird deshalb aufgrund der Parallel-Führung (23) die Vertikalausrichtung des Vertikalrahmens (10) und damit die Orientierung einer Öffnung des Auffangbunkers (7) beibehalten.

Zur Steuerung eines Hebens und Senkens des Greifers (9) sowie zur Steuerung von Öffnungs- und Schließbewegungen des Greifers (9) sind im Bereich des Gegengewichtes (28) Winden (32,33) angeordnet, die über Seile (34,35) mit dem Greifer (9) gekoppelt sind.

Zur Bereitstellung einer ausreichenden Biegesteifigkeit des Auslegers (4) ist oberhalb des als Drehkranz ausgebildeten Portalschwenkgelenkes (26) ein Haupttragelement (36) angeordnet, das über eine Abspannung (37), zum Beispiel über Seile, mit Enden des Auslegers (4) verbunden ist. Das Haupttragelement (36) kann ebenfalls als Pylon ausgebildet sein. Der Bunkerausleger (6) und der Vertikalrahmen (10) können als einheitlicher L-Rahmen ausgeführt sein.

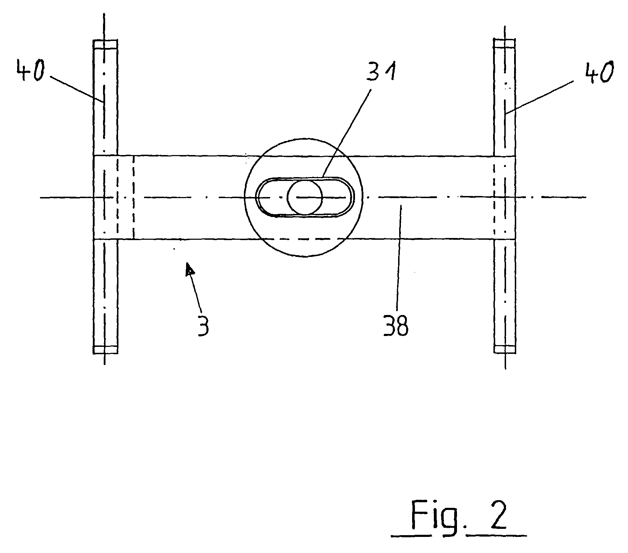

Fig. 2 zeigt in einer Draufsicht die Ausbildung des Portals (3). Es ist erkennbar, daß ein Portalriegel (38), der das Drehteil (31) trägt, über in Fig. 1 eingezeichnete Stützen (39,40) mit den Rädern (30) verbunden ist.

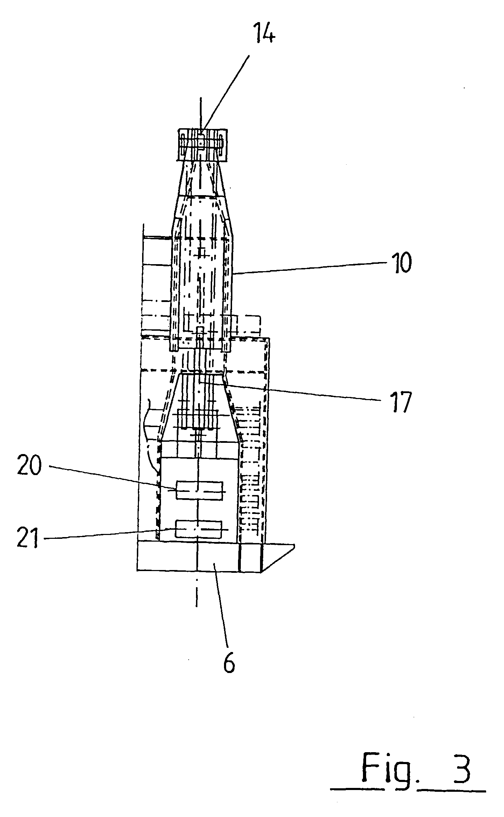

Die Darstellung in Fig. 3 veranschaulicht die Konstruktion des Vertikalrahmens (10). Insbesondere ist bei dieser Darstellung auch noch einmal die höhenversetzte Anordnung des als Bunkerabzugsband ausgebildeten Bunkerförderers (20) sowie des Auslegerförderers (21) zu erkennen.

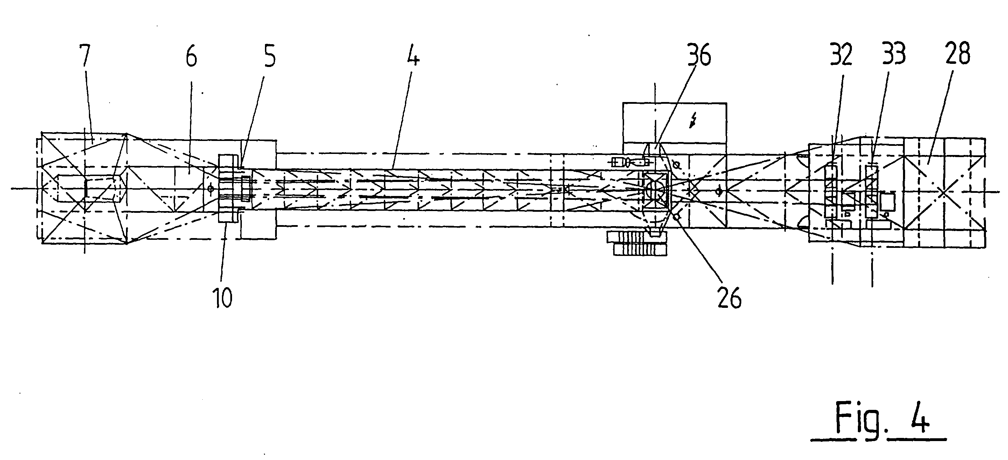

Fig. 4 veranschaulicht in einem Horizontalschnitt den grundsätzlichen Aufbau des Auslegers (4) sowie der Kopplung des Auslegers (4) mit dem Bunkerausleger (6). Ebenfalls ist durch den Querschnitt die Anordnung des Haupttragelementes (36) oberhalb des Portals (3) zu erkennen.

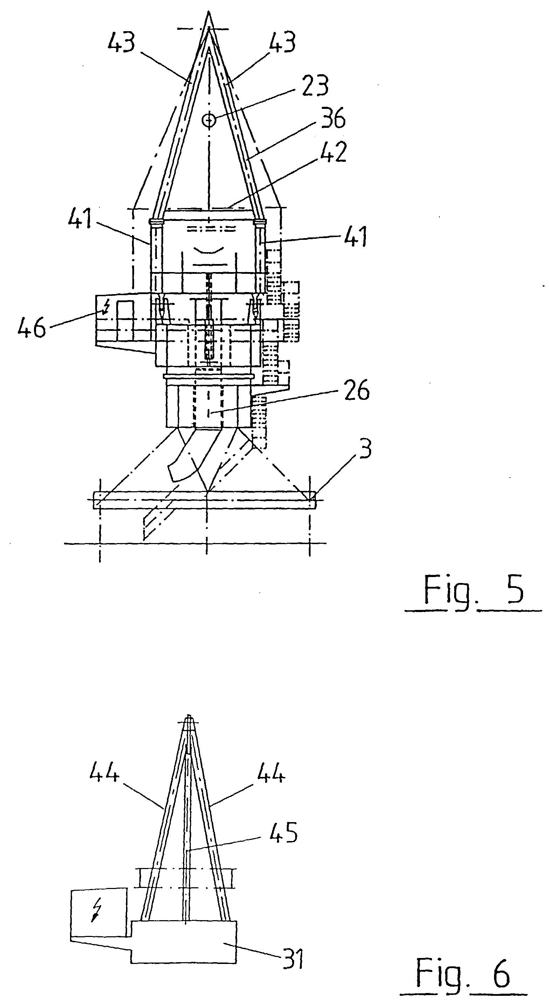

Fig. 5 veranschaulicht, daß das als Pylon ausgebildete Haupttragelement (36) säulenartige Seitenstreben (41) aufweist, die von einer Querstrebe (42) miteinander verbunden sind. Die Querstrebe (42) bildet gemeinsam mit Kopfstreben (43), die relativ zueinander schräg verlaufen, eine dreieckförmige Durchgangsfläche aus. Durch diese Fläche hindurch erstreckt sich die Parallel-Führung (23).

Aus Fig. 6 ist erkennbar, daß das als Pylon ausgebildete Basistragelement (25) im wesentlichen aus zwei Seitenstreben (44) sowie einer Mittelstrebe (45) besteht. Die Streben (44,45) laufen im Bereich ihrer dem Drehteil (31) abgewandten Enden spitzwinklig gegeneinander. Im Bereich des Drehteiles (31) ist ebenfalls ein Elektrohaus (46) mit den erforderlichen Transformatoren angeordnet.

Ein wesentlicher Vorteil der verschiedenen Vorrichtungen besteht darin, daß für das Wippsystem kein Gegengewicht benötigt wird und daß ohne ein zusätzliches Lastanheben und Lastabsenken der Wippvorgang für den Greifer-Wippsystem (8) durchgeführt werden kann. Es ist somit kein zusätzlicher Energieverbrauch durch eine mit der Wippbewegung verbundene Höhenveränderung des vom Greifer (9) gehalterten Schüttgutes erforderlich.

Die Parallel-Führung (23) führt zusätzlich zur Lagestabilisierung des Auffangbunkers (7) zu einer deutlichen Stabilisierung des Gesamtsystems, so daß insbesondere im Bereich des Auslegers (4) geringere Materialstärken eingesetzt werden können. Dies führt zu einer erheblichen Kostenreduzierung; Darüber hinaus wird das dynamische Verhalten des Gesamtsystems wesentlich verbessert.

Alternativ zu der Verwendung von einem separaten Bunkerförderer (20), der das Schüttgut bis in den Bereich der Hauptfördereinrichtung (19) transportiert, kann auch eine einzige Fördereinrichtung (18) zum Einsatz kommen. Wird ein separater Bunkerförderer (20) verwendet, so ist insbesondere daran gedacht, diesen mit einer relativ geringen Geschwindigkeit laufen zu lassen, damit bei einer Ausbildung als Förderband ein Bandverschleiß bei der Aufgabe gering bleibt. Alternativ zur Verwendung eines Förderbandes oder einer bereits erwähnten Förderschnecke können auch Kratzer oder andere Abzugseinheiten verwendet werden.

Eine Dimensionierung der vorgesehenen Wippbewegung für den Ausleger (4) erfolgt im konkreten Anwendungsfall derart, daß ausgehend von einer im wesentlichen horizontalen Grundposition eine vertikale Verschwenkbarkeit um +/-12° möglich ist. Hierdurch können die Entladezeiten minimiert werden. Die oben beschriebenen mechanischen Vorteile durch Verwendung der Parallel-Führung (23) stellen sich aber auch bei einem starren Ausleger (4) ein, der keine Wippbewegung durchführen kann.

Gegenüber konventionellen Entladevorrichtungen kann durch die Verwendung der separaten Parallel-Führung (23) eine Reduzierung des Stahlbaugewichtes um 50 - bis 60% erreicht werden. Dies führt zu einer Reduktion des Gesamtgewichtes der Vorrichtung um etwa 30%. Bei dem erfindungsgemäßen Greifer-Wippsystems tritt das sonst üblicher Anheben und Absenken der Last während der Wippbewegung nicht auf. Das führt dazu, daß die installierte Elektroleistung um etwa 40 bis 50% gesenkt werden kann. Als Folge des verringerten Baugewichtes der Vorrichtung treten unterhalb des Portals (3) geringere Erddrücke auf, es können somit weniger Räder für das Portal (3) verwendet werden und es sind leichtere Pierkonstruktionen einsetzbar, so daß die hafenseitigen Baukosten reduziert werden können.

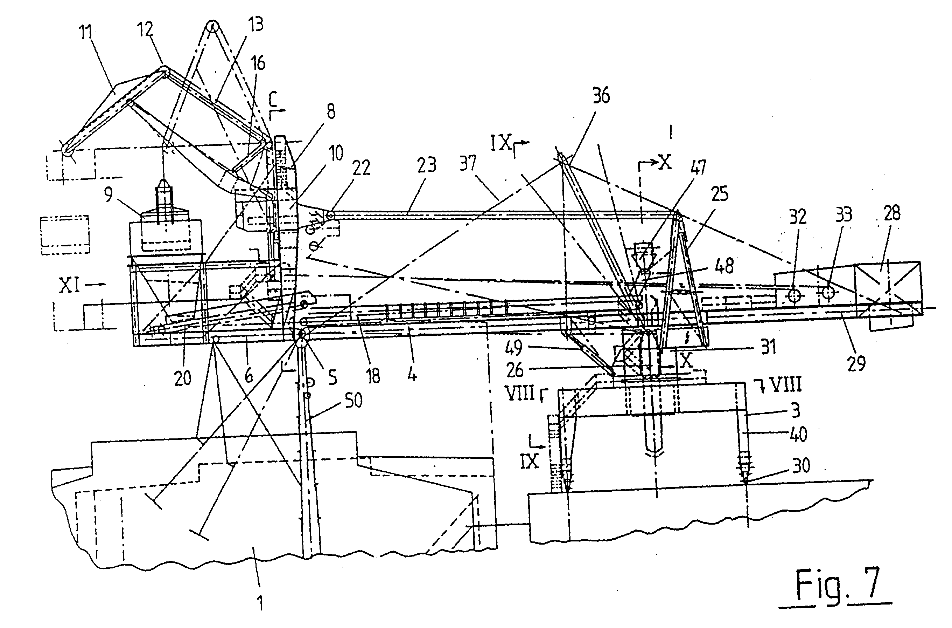

Fig. 7 zeigt eine Variante der Vorrichtung, mit der sowohl ein Entladevorgang als auch ein Beladevorgang durchgeführt werden kann. Der Auslegerförderer (21) ist bei dieser Ausführungsart in zwei Transportrichtungen beweglich. Zur Ermöglichung einer Zuführung von Schüttgut in der Bereich des Auslegerförderers (21) ist oberhalb des dem Portal (3) zugewandten Endes des Auslegerförderers (21) ein Zuführtrichter (47) angeordnet, der das Schüttgut über eine Zuführrutsche (48), die beispielsweise rohrartig ausgebildet sein kann, in den Bereich des Auslegerförderers (21) leitet.

Insbesondere ist daran gedacht, den Zuführtrichter (47) in lotrechter Richtung oberhalb des Portalschwenkgelenkes (26) anzuordnen und für das Haupttragelement (36) eine Schrägstellung vorzusehen, um eine gute Zugänglichkeit für den Zuführtrichter (47) zu gewährleisten. Zur Vorgabe von vertikalen Verschwenkungen des Auslegers (4) ist auch bei dieser Ausführungsform ein Stellelement (49) vorgesehen, das beispielsweise als Zylinder ausgebildet ist, der einerseits am Ausleger (4) und andererseits an dem Drehteil (31) angelenkt ist.

Unterhalb des dem Portal (3) abgewandten Endes des Auslegerförderers (21) ist ein Fallrohr (50) angeordnet, das vorzugsweise aus teleskopierbaren Segmenten ausgebildet ist. Das Fallrohr (50) leitet das Schüttgut in den Bereich eines Laderaumes des Schiffes (1) und verhindert hierdurch große Staubentwicklungen.

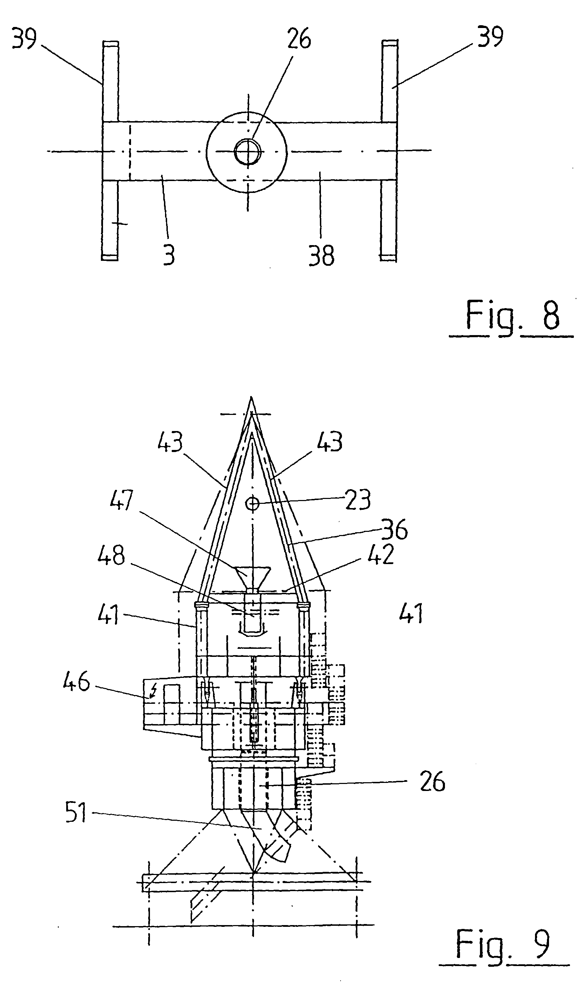

Fig. 8 zeigt einen Horizontalschnitt, der im wesentlichen die gleichen Bauelemente zeigt wie der Horizontalschnitt gemäß Schnittlinie II-II in Fig. 1.

Aus dem Vertikalschnitt in Fig. 9 ist gegenüber dem Vertikalschnitt in Fig. 5 erkennbar, daß zusätzlich der Zuführtrichter (47) und die Zuführrutsche (48) vorgesehen sind. Gegenüber der Darstellung in Fig. 5 ist ebenfalls eine Entladerutsche (51), die beispielsweise rohrförmig ausgebildet sein kann, um 180° gedreht.

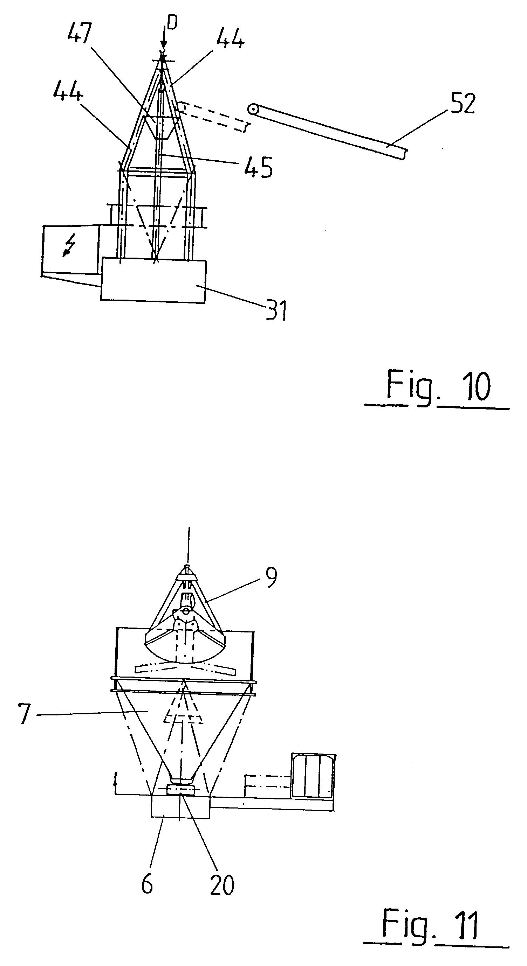

Fig. 10 zeigt in einer Vertikalschnittdarstellung, die im wesentlichen der Darstellung in Fig. 6 entspricht, die Anordnung eines Beladeförderers (52). In der durchzogen eingezeichneten Positionierung ist die Anordnung bei der Durchführung eines Entladevorganges und in der gestrichelt dargestellten Positionierung die Anordnung bei der Durchführung eines Beladevorganges dargestellt. Bei einem Beladen des Schiffes (1) wird somit über den Beladeförderer (52) das zu verladende Gut in den Bereich des Zuführtrichters (47) geleitet.

Fig. 11 zeigt eine Seitenansicht des Auffangbunkers (7) gemäß Blickrichtung XI in Fig. 7. Es ist in einer vergrößerten und detailgetreueren Darstellung der Aufbau des Greifers (9) erkennbar.

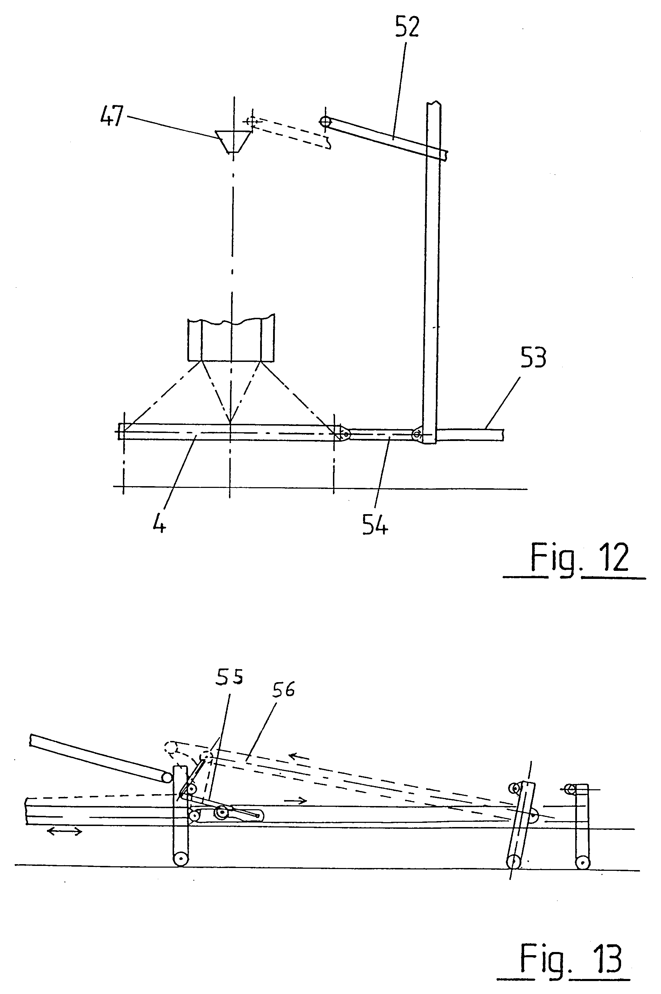

In Fig. 12 ist nochmals die Anordnung des Beladeförderers (52) relativ zum Zuführtrichter (47) dargestellt. Es ist erkennbar, daß zur Halterung des Beladeförderers (52) ein Bandschleifenwagen (53) vorgesehen ist, der in der in durchzogenen Linien dargestellten Entladepositionierung über eine Koppelstange (54) mit dem Portal (3) verbunden ist. Zur Überführung in eine Beladepositionierung wird die Koppelstange (54) entfernt und eine unmittelbare Verbindung durchgeführt.

Aus Fig. 13 ist erkennbar, daß ein oberer Gurt (55) in einer in durchgezogenen Linien dargestellten Entladepositionierung abgesenkt und in einer in gestrichelten Linien dargestellten Beladepositionierung angehoben angeordnet ist. Zur Positionierung kann ein Stellelement (55) verwendet werden, das beispielsweise als Stellzylinder ausgebildet und am oberen Gurt (56) drehbeweglich angelenkt ist.

## Patentansprüche

1. Vorrichtung zum Entladen von Schüttgut aus dem Bereich von Laderäumen, insbesondere aus Laderäumen von Schiffen, die ein Portal aufweist, das einen Allsieger trägt, der im Bereich seines dem Portal abgewandten Endes mit einem Greifer-Wippsystem versehen ist, der einen höhenpositionierbaren Greifer haltert und bei der in einem Arbeitsbereich des Greifers ein Auffangbunker angeordnet ist, der das Schüttgut mindestens einer Fördereinrichtung zuführt, dadurch gekennzeichnet, daß ein Vertikalrahmen (10) des Greifer-Wippsystems (8) starr mit einem den Auffangbunker (7) tragenden Bunkerausleger (6) verbunden ist, daß der Bunkerausleger (6) vertikal schwenkbar mit dem Ausleger (4) verbunden ist und daß sich im wesentlichen parallel und mit einem Abstand zum Ausleger (4) eine Parallel-Führung (23) erstreckt, die vertikal verschwenkbar mit dem Vertikalrahmen (10) verbunden ist sowie im Bereich ihres dem Vertikalrahmen (10) abgewandten Endes vertikal verschwenkbar mit einem Basistragelement (25) verbunden ist.

2. Vorrichtung nach Anspruch 1, dadurch gekennzeichnet, daß der Ausleger (4) vertikal verschwenkbar um ein Auslegerwippgelenk (27) zum Drehteil angeordnet ist.

3. Vorrichtung nach Anspruch 1 oder 2, dadurch gekennzeichnet, daß der Ausleger (4) horizontal drehbar um ein Portalschwenkgelenk (26) angeordnet ist.

4. Vorrichtung nach einem der Ansprüche 1 bis 3, dadurch gekennzeichnet, daß das Basistragelement (25) in vertikaler Richtung starr relativ zum Drehteil (3) angeordnet ist.

5. Vorrichtung nach einem der Ansprüche 1 bis 4, dadurch gekennzeichnet, daß vom Ausleger (4), von der Parallel-Führung (23), vom Vertikalrahmen (10) sowie vom Basistragelement (25) eine parallelogrammartige Struktur ausgebildet ist.

6. Vorrichtung nach einem der Ansprüche 1 bis 5, dadurch gekennzeichnet, daß die Wippbewegung des Auslegers hydraulisch erfolgt.

7. Vorrichtung nach einem der Ansprüche 1 bis 6, dadurch gekennzeichnet, daß die Fördereinrichtung (18) als mindestens ein Transportband ausgebildet ist.

8. Vorrichtung nach einem der Ansprüche 1 bis 7, dadurch gekennzeichnet, daß die Fördereinrichtung (18) aus einem Auslegerförderer (21) und aus einem Bunkerabzugsförderer (20) besteht.

9. Vorrichtung nach einem der Ansprüche 1 bis 8, dadurch gekennzeichnet, daß zur Ansteuerung des Wippsystems ein zylinderartiges Stellelement (29) vorgesehen ist.

10. Vorrichtung nach einem der Ansprüche 1 bis 9, dadurch gekennzeichnet, daß sowohl Mittel zur Durchführung eines Beladevorganges als auch Mittel zur Durchführung eines Entladevorganges vorgesehen sind.

11. Vorrichtung nach einem der Ansprüche 1 bis 10, dadurch gekennzeichnet, daß zur Durchführung von Beladevorgängen oberhalb des Portals (3) ein Zuführtrichter (47) und zwischen Portal und Schleifenwagen eine Kuppelstange angeordnet ist.

12. Verfahren zum Entladen von Schüttgut aus dem Bereich von Laderäumen, insbesondere aus Laderäumen von Schiffen, bei dem oberhalb des Laderaumes von einem Ausleger ein Greifer-Wippsystem positioniert wird, der einen vertikal positionierbaren Greifer haltert, von dem das Schüttgut einem Auffangbunker zugeführt wird, der das Schüttgut in Richtung auf eine sich entlang des Auflegers erstreckende Fördereinrichtung leitet, dadurch gekennzeichnet, daß der Auffangbunker (7) von einem Bunkerausleger (6) gehaltert wird, der relativ zum Ausleger (4) in lotrechter Richtung drehbeweglich geführt ist und daß der Bunkerausleger (6) über eine Parallelführung derart mit einem Drehteil (34) gekoppelt wird, daß bei einer vertikalen Schwenkbewegung des Auslegers (4) eine vorgegebene räumliche Orientierung des Auffangbunkers (7) beibehalten wird.
